# EUROPEAN PATENT APPLICATION

(11) **EP 1 632 665 A1**
(43) Date of publication of application: **08.03.2006**
(21) Application number: 04255370.1
(22) Date of filing: 03.09.2004
(51) Int. Cl.: F02D 19/06, F02M 25/14, C10L 1/14

(54) **A method for improving the power output of a dual-fuel gas engine**

(71) Applicant: Infineum International Limited, Abingdon, Oxfordshire OX13 6BB (GB)
(72) Inventor: Hitchings, Greg J, Oxfordshire OX14 1SL (GB); Chambard, Laurent, Englewood, New Jersey 07631 (US)
(74) Representative: Lewis, Pauline Therese

(57) **Abstract**

A method for improving the power output of a dual-fuel gas engine including a gas charge and a diesel charge. The method includes the step of adding an antiknock component to the diesel charge.

## Description

This invention relates to a method for improving the power output of a dual-fuel gas engine.

Spark-ignited gas engines produce lower emissions (including particulates and nitrogen oxides (NOₓ)) than diesel engines, but diesel engines are better in terms of mechanical efficiency, including running costs, and power output in terms of KW for a given engine size. Dual-fuel gas engines are a good compromise between spark-ignited gas engines and diesel engines because they produce lower emissions than diesel engines and their power output is higher than spark-ignited engines; unfortunately, their power output is not as high as diesel engines.

A dual-fuel gas engine uses a mixture of a natural gas charge and a diesel charge, which is ignited using a diesel 'pilot', which acts like a sparkplug. The diesel charge is injected directly into the combustion chamber, while the gas charge is introduced into the air intake by carburetion or by gas injection. The mixture of natural gas and diesel varies according to the load and the duty cycle of the engine, ranging anywhere from 80% down to 0% gas charge. At low engine loads the diesel charge tends to be higher whereas at higher engine loads, it is possible to use a higher gas charge. Typically, a dual-fuel engine runs on about 1-10%, preferably 1-5%, diesel charge with the rest of the energy supplied by the natural gas charge. The mechanical efficiency in a dual-fuel engine is about 10% better than in a spark-ignited natural gas engine.

An aim of the present invention is to improve the power output of a dual-fuel gas engine.

In accordance with the present invention there is provided a method for improving the power output of a dual-fuel gas engine including a gas charge and a diesel charge, the method including the step of adding an anti-knock component to the diesel charge.

In accordance with the present invention there is also provided a dual-fuel gas engine including a gas charge and a diesel charge; the diesel charge including an anti-knock component.

In a further aspect of the present invention there is also provided use of an anti-knock component to increase power output of a dual-fuel engine including a gas charge and a diesel charge, the anti-knock component being added to the diesel charge.

Finally, there is provided a diesel fuel including an anti-knock component.

The anti-knock component is preferably selected from an oxygenated compound, a hydrocarbon, an amino hydrocarbon or a mixture thereof.

Oxygenated compounds are compounds of hydrogen, carbon and oxygen that are added to gasoline to boost octane quality or to extend the volume of fuel available.

The oxygenated compound is preferably selected from alcohols, ketones, esters and ethers. The oxygenated compound is preferably selected from: methanol, ethanol, isopropanol, t-butanol, mixed C1 to C5 alcohols, methyl tertiary butyl ether, tertiary amyl methyl ether, ethyl tertiary butyl ether and mixed ethers, ketones including methyl ethyl ketone, rape methyl ester and fatty acid methyl esters.

The hydrocarbon may be iso-octane, iso-octene, a highly branched refinery process stream or an aromatic compound.

The amino compounds may be aniline derivatives, amino-fulvene derivatives, tetrazine derivatives, carbazole or its derivatives, diphenylamine derivatives or azodicarboxylate derivatives.

The anti-knock component can increase the power output of a dual-fuel gas engine by at least 5%, preferably by at least 10%.

In the dual-fuel gas engine, the diesel charge is usually less than 10%, such as less than 5%, of the total fuel charge in the dual-fuel gas engine.

The anti-knock component is preferably present in an amount ranging from 0.5 to 50%, based on the total mass of diesel charge.

## Claims

1. A method for improving the power output of a dual-fuel gas engine including a gas charge and a diesel charge, the method including the step of adding an anti-knock component to the diesel charge.

2. A dual-fuel gas engine including a gas charge and a diesel charge, the diesel charge including an anti-knock component.

3. Use of an anti-knock component to increase power output of a dual-fuel engine including a gas charge and a diesel charge, the anti-knock component being added to the diesel charge.

4. Diesel fuel including an anti-knock component.

5. The method, dual-fuel gas engine, use or diesel fuel as claimed in any one of the preceding claims, wherein the anti-knock component is an oxygenated compound, a hydrocarbon, an amino hydrocarbon or a mixture thereof.

6. The method, dual-fuel gas engine, use or diesel fuel as claimed in any one of the preceding claims, wherein the diesel charge is less than 10%, preferably less than 5%, of the total fuel charge in the dual-fuel gas engine.

7. The method, dual-fuel gas engine, use or diesel fuel as claimed in claim 5, wherein the oxygenated compound is at least one additive selected from: methanol, ethanol, isopropanol, t-butanol, mixed C1 to C5 alcohols, methyl tertiary butyl ether, tertiary amyl methyl ether, ethyl tertiary butyl ether and mixed ethers, ketones including methyl ethyl ketone, rape methyl ester and fatty acid methyl esters; the hydrocarbon is at least one additive selected from: iso-octane, iso-octene, a highly branched refinery process stream or an aromatic compound; and the amino compound is at least one additive selected from: aniline derivatives, amino-fulvene derivatives, tetrazine derivatives, carbazole or its derivatives, diphenylamine derivatives or azodicarboxylate derivatives.

8. The method, dual-fuel gas engine, use or diesel fuel as claimed in any one of the preceding claims, wherein the anti-knock component is present in an amount ranging from 1 to 5,000 ppm, preferably 1 to 2,500 ppm, and more preferably 1 to 1,000 ppm, based on the total mass of fuel charge.
